# EUROPÄISCHE PATENTSCHRIFT

(11) **EP 0 472 174 B1**
(45) Veröffentlichungstag und Bekanntmachung des Hinweises auf die Patenterteilung: **12.04.1995**
(21) Anmeldenummer: 91113981.4
(22) Anmeldetag: 21.08.1991
(51) Int. Cl.: B60K 17/08, F16H 3/091

(54) **Zahnräderwechselgetriebe in Vorgelegebauweise für ein Kraftfahrzeug**
Change wheel gear of type countershaft transmission for a vehicle
Boîte de vitesses à engrenages de type transmission intermédiaire pour un véhicule

(30) Priorität: 24.08.1990 DE 4026745
(43) Veröffentlichungstag der Anmeldung: 26.02.1992
(73) Patentinhaber: ZF FRIEDRICHSHAFEN Aktiengesellschaft, 88038 Friedrichshafen (DE)
(72) Erfinder: Ebner, Otto, W-7990 Friedrichshafen 24 (DE); Fritz, Walter, W-7997 Immenstaad (DE); Bieber, Gerold, W-7994 Langenargen (DE); Staberoh, Uwe, W-7990 Friedrichshafen 1 (DE)

(56) Entgegenhaltungen:
- DE-A- 2 722 902
- DE-A- 3 214 709
- DE-A- 3 604 727
- FR-A- 2 403 907
- US-A- 2 203 282
- US-A- 4 827 783
- EP-B1-34814

## Beschreibung

Die Erfindung bezieht sich auf ein Zahnräderwechselgetriebe in Vorgelegebauweise für ein Kraftfahrzeug mit einer quer zur gesamten übrigen Wellenanordnung des Zahnräderwechselgetriebes, vorzugsweise im Bereich von dessen Quermittelebene verlaufenden Eingangswelle, die von einer Brennkraftmaschine antreibbar und über einen Kegeltrieb mit einer Antriebswelle trieblich verbunden ist, und mit einem Ausgleichsgetriebe, das unterhalb der Antriebswelle angeordnet und mit zumindest einer parallel zu der Antriebswelle verlaufenden Abtriebswelle verbunden ist. Dabei ist das Ausgleichsgetriebe von der Antriebswelle aus über zumindest eine sowohl zur Antriebswelle als auch dem Ausgleichsgetriebe bzw. der Abtriebswelle parallel verlaufenden Zwischenwelle und Zahnradpaare antreibbar.

Aus der EP-A-76591 ist ein Zahnräderwechselgetriebe in Vorlegebauweise für ein Kraftfahrzeug bekannt, das eine Eingangswelle, vorzugsweise im Bereich der Quermittelebene des Getriebes, aufweist, die quer zur gesamten übrigen Wellenanordnung vorgesehen ist. Die Eingangswelle ist von einer Brennkraftmaschine antreibbar und über einen Kegeltrieb mit einer Antriebswelle trieblich verbunden. Weiterhin weist das bekannte Zahnräderwechselgetriebe ein Ausgleichsgetriebe auf, das unterhalb der Antriebswelle angeordnet ist und mit zumindest einer parallel zu der Antriebswelle verlaufenden Abtriebswelle verbunden ist. Dabei ist das Ausgleichsgetriebe von der Antriebswelle aus über zumindestens eine sowohl zur Antriebswelle als auch zum Ausgleichsgetriebe bzw. der Abtriebswelle parallel verlaufende Zwischenwelle und Zahnradpaare antreibbar. Durch die unterschiedliche horizontale Anordnung von Eingangswelle und Antriebswelle wird eine kostspielige Sonderverzahnung, beispielsweise eine Hypoidverzahnung, notwendig. Dabei baut das Getriebe bei entsprechender Gangstufenzahl breit und eignet sich beispielsweise wenig zum Einbau in einem frontgetriebenen Fahrzeug.

Weiterhin ist aus der DE-A 27 22 902 ein Zahnräderwechselgetriebe bekannt, das für ein frontangetriebenes Personenkraftfahrzeug vorgesehen ist. Eine über eine Schaltkupplung mit der Kurbelwelle einer Brennkraftmaschine verbundene Eingangswelle treibt eine Antriebswelle an, wobei die Antriebswelle gegenüber der Eingangswelle tiefer angeordnet ist. Am Kegeltrieb zwischen Eingangs- und Antriebswelle wird wegen dieser unterschiedlichen Horizontalebenen der beiden Wellen eine Hypoidverzahnung benötigt, die baulich aufwendig ist und wegen ihrer Schmierungsprobleme eines besonderen Schmiermittels bedarf. Das bekannte Zahnräderwechselgetriebe ist als 4-Gang-Getriebe ausgebildet, wobei die unterschiedlichen Übersetzungsstufen durch Zahnradpaare der Antriebswelle und einer einen Differentialkorb des Ausgleichsgetriebes beidseitig verlängernden Hohlwelle gebildet werden. Dabei ist eine Schaltkupplung zum Einlegen zweier Gangstsufen auf der Antriebswelle angeordnet und es befindet sich eine weitere Schaltkupplung auf dem einen Hohlwellenteil des Differentialkorbes. Das Zahnräderwechselgetriebe ist baulich relativ aufwendig und aufgrund seiner Wellenanordnung nur für eine geringe Anzahl schaltbarer Gangstufen geeignet. Da die Schaltkupplungen auf unterschiedlichen Wellen angeordnet sind und mit der einen Schaltkupplung noch ein Schieberad für eine Rückwärtsganganordnung verbunden ist, erhöht sich der Aufwand für die an diesem Zahnräderwechselgetriebe zu verwendende Schalteinrichtung. Weiterhin weist das Zahnräderwechselgetriebe beidseitig seines Ausgleichsgetriebes eine relativ große axiale Baulänge auf, die dadurch bedingt ist, daß die zur Schaltung der Gangstufen erforderlichen Zahnräder beidseitig des Differentialkorbes angeordnet sind. Diese große axiale Baulänge im Bereich des Abtriebes des Zahnräderwechselgetriebes führt weiterhin zu dem Nachteil, daß bei einem Frontantrieb nur sehr kurze Gelenkwellen verwendet werden können, an denen bereits bei geringem Achsversatz zwischen Abtriebswelle und jeweils angetriebenem Rad relativ große Beugungswinkel auftreten.

Der Erfindung liegt daher die Aufgabe zugrunde, die vorgenannten Nachteile zu vermeiden, wobei unter Verwendung eines einfachen Kegeltriebes ein baulich kompaktes Zahnräderwechselgetriebe geschaffen werden soll, das mit baulich einfachen Schalteinrichtungen schaltbar sein soll.

Diese Aufgabe wird an einem Zahnräderwechselgetriebe der eingangs genannten Gattung nach dem kennzeichnenden Teil des Anspruches 1 gelöst.

Das Ausgleichsgetriebe ist von der Antriebswelle aus über zumindest eine sowohl zur Antriebswelle als auch dem Ausgleichsgetriebe bzw. der Abtriebswelle parallel verlaufende Zwischenwelle und Zahnradpaare antreibbar.

Durch die Verwendung zumindest einer Zwischenwelle, deren Zahnräder mit Zahnrädern der Antriebswelle und des Ausgleichsgetriebes kämmen, läßt sich das Zahnräderwechselgetriebe mit einer relativ großen Anzahl schaltbarer Gangstufen ausführen. Außerdem kann das vertikale Abstandsmaß zwischen der Eingangswelle und der Abtriebswelle verringert werden, da dieser Wellenabstand nicht mehr durch die die Übersetzung in den jeweiligen Gangstufen bestimmenden Zahnraddurchmesser bestimmt ist. Ein geringer Abstand zwischen Eingangswelle und Ausgleichsgetriebe ist insbesondere bei einer Verwendung des Zahnräderwechselgetriebes für den Frontantrieb eines Kraftfahrzeuges von Bedeutung, da der Einbauraum bei einem Nutzkraftfahrzeug nach oben begrenzt ist durch dessen Kabinenboden und bei einem Personenkraftfahrzeug begrenzt ist durch die Motorhaube. Durch die Verwendung von zumindest zwei Zwischenwellen kann zum einen die Bauhöhe des Zahnräderwechselgetriebes verringert werden und zum anderen kann die Brennkraftmaschine derart mit dem Zahnräderwechselgetriebe eine Einheit bilden, daß sie nicht wesentlich über die obere Außenkontur des Zahnräderwechselgetriebes vorsteht. Auf eine Hypoidverzahnung kann verzichtet werden, wozu die Eingangswelle und die Antriebswelle in einer horizontalen Ebene angeordnet sind.

Als Zwischenwellen sind eine mit einem vertikalen Abstand oberhalb der Längsmittelachse der Eingangswelle verlaufende Vorgelegewelle und eine Hauptwelle vorgesehen, wobei ein Kraftfluß von der Antriebswelle über die Vorgelege- und die Hauptwelle auf zumindest ein drehfest mit dem Ausgleichsgetriebe verbundenes Zahnrad erfolgt. In den Kraftfluß sind somit in den Vorwärtsgangstufen jeweils vier Zahnräder als Räderkette eingeschaltet und es können dabei eine Vielzahl von unterschiedlichen Übersetzungsstufen eingeschaltet werden. Das Zahnräderwechselgetriebe weist dabei aufgrund der Wellenanordnung einen sehr kompakten Aufbau auf.

Sämtliche Zahnräder der Vorgelegewelle sind frei auf dieser gelagert und diese Zahnräder werden mittels Schaltkupplungen wahlweise an die Vorgelegewelle gekuppelt. Diese Anordnung sämtlicher Schaltkupplungen auf der Vorgelegewelle führt zu wesentlichen Vorteilen bei der Ausbildung einer Schalteinrichtung für dieses Zahnräderwechselgetriebe. Folglich können nämlich sämtliche Schaltstangen in einem bestimmten Bereich des Zahnräderwechselgetriebes angeordnet sein, wobei außerdem die Möglichkeit besteht, identisch ausgebildete Schaltgabeln zu verwenden.

Weitere vorteilhafte Ausgestaltungen der Erfindung sind in den Unteransprüchen 2 bis 10 beschrieben.

Unter dem Gesichtspunkt, das Zahnräderwechselgetriebe sehr kompakt auszubilden, ist nach Anspruch 2 ein Umkehrrad oder Rückwärtsvorgelege oberhalb der Antriebswelle angeordnet, wobei es im Eingriff steht mit einem drehfest auf der Antriebswelle angeordneten Zahnrad und einem frei drehbar auf der Vorgelegewelle angeordneten Zahnrad, welches über eine Schaltkupplung mit der Vorgelegewelle kuppelbar ist. Dadurch kann das Umkehrrad oder das Rückwärtsvorgelege in einem oberhalb der Antriebswelle vorhandenen Freiraum angeordnet werden.

Gemäß Anspruch 3 soll jeweils ein Teil der frei drehbar auf der Vorgelegewelle angeordneten Zahnräder gemeinsam mit drehfest auf der Antriebswelle und der Hauptwelle angeordneten Zahnrädern ein Gruppengetriebe und ein diesem nachgeschaltetes Grundgetriebe bilden. Mit den Zahnrädern der Antriebswelle und der Vorgelegewelle wird dabei die Vorgelegewelle in der jeweiligen Gruppenübersetzung angetrieben, während die Zahnradpaarungen zwischen der Vorgelegewelle und der Hauptwelle die jeweiligen Gangübersetzungen des Grundgetriebes bilden. Das Zahnräderwechselgetriebe weist somit eine Vielzahl unterschiedlicher Übersetzungen auf, die sich daraus ergibt, daß in dem jeweiligen Bereich des Gruppengetriebes die einzelnen Gangstufen des Grundgetriebes schaltbar sind. Das Zahnräderwechselgetriebe läßt sich folglich auch mit entsprechenden Übersetzungen des Grundgetriebes in der vorgesehenen Rückwärtsgruppe betreiben.

Gemäß Anspruch 4 sollen die Vorgelegewelle sowie die Antriebs- und die Eingangswelle derart zueinander angeordnet sein, daß eine Verbindungslinie zwischen der jeweiligen Mitte der Antriebswelle und der Vorgelegewelle mit einer in Verlängerung der Längsmittellinie der Eingangswelle verlaufenden Linie einen Winkel α ≦ 150° einschließt.

Dem Anspruch 5 zufolge können dabei die parallel zueinander verlaufenden Wellen des Zahnräderwechselgetriebes derart zueinander angeordnet sein, daß Linien, die in Richtung des Kraftflusses die jeweiligen Wellenmitten miteinander verbinden, einen trapezförmigen Verlauf haben.

Weiterhin soll gemäß Anspruch 6 stirnseitig des Getriebegehäuses, oberhalb der Vorgelegewelle, eine Schaltbox angeordnet sein, die über hydraulische, pneumatische oder elektrische Betätigungselemente auf radial zur Vorgelegewelle angeordnete Schaltstangen wirkt. In dieser Schaltbox, die räumlich sehr günstig angeordnet ist, lassen sich sämtliche Schaltungen des Gruppengetriebes und des Grundgetriebes durchführen.

Schließlich soll gemäß Anspruch 7 die Außenkontur des Getriebegehäuses in Achsrichtung im Bereich des Ausgleichsgetriebes im Vergleich zur übrigen Kontur schmaler ausgebildet sein, wobei die Abmessung in diesem Bereich etwa der axialen Baulänge des Differentialkorbes entspricht. Das Zahnräderwechselgetriebe ist demnach in dem Bereich, in dem der Abtrieb auf die zu den Rädern des Kraftfahrzeuges führenden Gelenkwellen erfolgt, sehr schmal ausgebildet. Damit können die Gelenkwellen mit möglichst großer Länge ausgeführt sein, so daß aufgrund von Lenk- und Federbewegungen der Achse der zulässige Beugewinkel dieser Gelenke nicht überschritten wird. In vorteilhafter Weise ist dabei das Ausgleichsgetriebe gegenüber den Antriebsrädern des Kraftfahrzeuges mittig angeordnet, wodurch sich gleich lange Gelenkwellen ergeben. Unterschiedlich lange Gelenkwellen würden nämlich den Nachteil eines Eigenlenkverhaltens der angetriebenen Radachse, das aus dem Antrieb resultiert, mit sich bringen.

Die Erfindung ist nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung. Es zeigen:
- Fig. 1: ein Getriebeschema eines erfindungsgemäßen Zahnräderwechselgetriebes in Vorgelegebauweise, wobei zur Verdeutlichung des in einzelnen Gangstufen stattfindenden Kraftflusses die Wellenanordnung auseinandergeklappt ist;
- Fig. 2: eine tabellarische Schaltlogik, aus der hervorgeht, welche Schaltelemente bei dem Zahnräderwechselgetriebe nach Fig. 1 in den einzelnen Gangstufen betätigt sind;
- Fig. 3: einen Querschnitt durch ein nach Fig. 1 ausgebildetes Zahnräderwechselgetriebe im Bereich von dessen Quermittelebene;
- Fig. 4: einen Längsschnitt durch das Zahnräderwechselgetriebe nach Fig. 3;
- Fig. 5: einen vorderen Abschnitt eines Nutzkraftfahrzeuges mit Frontantrieb, wobei eine Brennkraftmaschine, in Fahrtrichtung gesehen, vor dem in eine Vorderachse integrierten Zahnräderwechselgetriebe angeordnet ist und
- Fig. 6: einen vorderen Abschnitt eines Nutzkraftfahrzeuges mit Frontantrieb, bei dem eine Brennkraftmaschine, in Fahrtrichtung gesehen, hinter dem Zahnräderwechselgetriebe angeordnet ist.

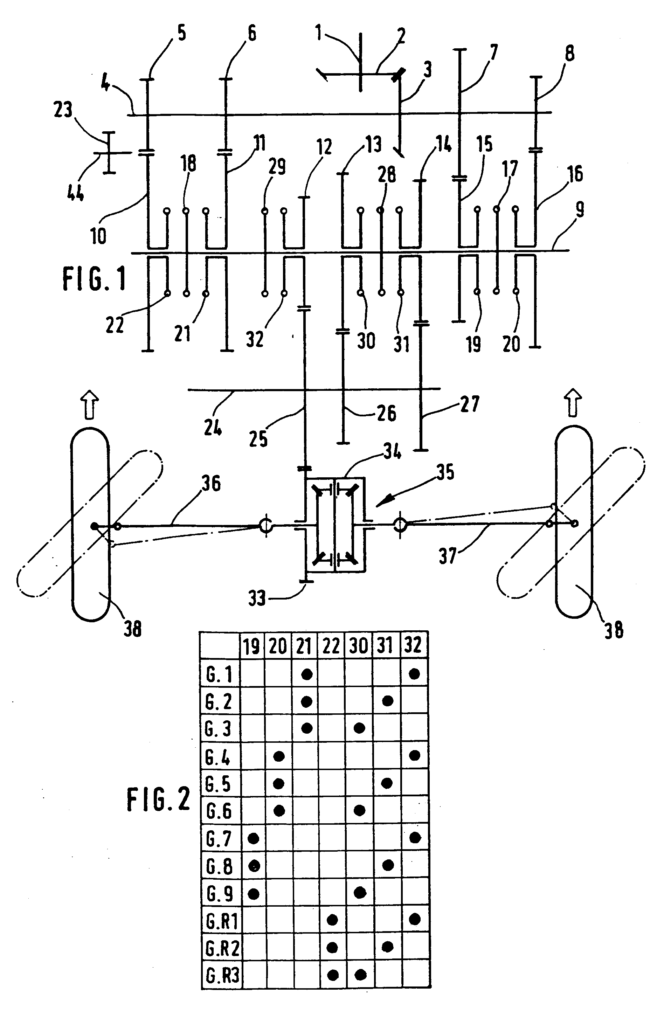

In der Fig. 1 ist mit 1 eine Eingangswelle bezeichnet, die, im Bereich der Quermittelebene der gesamten übrigen Getriebeanordnung liegend, über einen aus Kegelrädern 2 und 3 bestehenden Kegeltrieb eine Antriebswelle 4 antreibt. Auf der Antriebswelle 4 sind drehfest mit dieser verbundene Zahnräder 5, 6, 7 und 8 angeordnet. Parallel zur Antriebswelle verläuft eine Vorgelegewelle 9, auf welcher Zahnräder 10, 11, 12, 13, 14, 15 und 16 frei drehbar und mit dieser Vorgelegewelle 9 kuppelbar angeordnet sind. Dabei liegen folgende Zahnräder der Antriebswelle 4 und der Vorgelegewelle 9 in einer gemeinsamen Radebene:
Zahnräder 5 und 10, Zahnräder 6 und 11, Zahnräder 7 und 15 sowie Zahnräder 8 und 16.

Auf der Vorgelegewelle 9 sind weiterhin drehfest, aber axial verschiebbar Schaltkupplungen 17 und 18 angeordnet, die vorzugsweise nicht näher dargestellte Schiebemuffen und Synchronisiereinrichtungen aufweisen. Die Schaltkupplung 17 wirkt, sofern sie in ihre linke Schaltposition bewegt wird, mit einem drehfest mit dem Zahnrad 15 verbundenen Kuppelelement 19 zusammen, während sie sich in ihrer rechten Position mit einem Kuppelelement 20 in Eingriff befindet. Auf diese Weise verbindet die Schaltkupplung 17 wahlweise eines der Zahnräder 15 oder 16 drehfest mit der Vorgelegewelle 9.

Die Schaltkupplung 18 wirkt in entsprechender Weise mit Kuppelelementen 21 und 22 zusammen, von denen das Kuppelelement 21 mit dem Zahnrad 11 und das Kuppelelement 22 mit dem Zahnrad 10 verbunden sind. Über die Schaltelemente 17 - bis 22 erfolgt eine Gruppenumschaltung des Zahnräderwechselgetriebes. Das Zahnrad 5 der Antriebswelle 4 treibt dabei unter Zwischenschaltung eines Umkehrrades 23 das Zahnrad 10 der Vorgelegewelle 9 an, wodurch eine Rückwärtsgruppe des Zahnräderwechselgetriebes gebildet wird.

In Richtung des Kraftflusses ist der Vorgelegewelle 9 eine parallel zu dieser verlaufende Hauptwelle 24 zugeordnet, auf der Zahnräder 25, 26 und 27 drehfest angeordnet sind. Dabei bilden die Zahnräder 12 und 25, 13 und 26 sowie 14 und 27 von Vorgelegewelle 9 und Hauptwelle 24 gemeinsame Radzüge. Zur Schaltung dieser Radzüge in den Kraftfluß sind Schaltkupplungen 28 und 29 vorgesehen, die ebenfalls vorzugsweise Schiebemuffen und Synchronisiereinrichtungen aufweisen und die mit Kuppelelementen 30, 31 und 32 zusammenwirken. Durch eine Bewegung der Schaltkupplung 28 in ihre linke oder rechte Position stellt diese wahlweise über das Kuppelelement 30 oder 31 eine drehfeste Verbindung zwischen der Vorgelegewelle 9 und einem der beiden Zahnräder 13 oder 14 her. Die Schaltkupplung 29 ist nur einfach wirkend, d. h., sie schaltet nur das Zahnrad 12 in den Kraftfluß.

Gemeinsam mit den Zahnrädern 12 und 25 liegt ein Ausgangszahnrad 33 in einer Radebene, wobei dieses Ausgangszahnrad 33 drehfest verbunden ist mit einem Differentialkorb 34 eines Ausgleichsgetriebe 35. Von diesem Ausgleichsgetriebe 35, das in üblicher Weise als Kegelräderausgleichsgetriebe ausgebildet ist, darüber hinaus aber auch als Stirnradausgleichsgetriebe in Planetenbauweise ausgebildet sein kann, werden über Halbachsen 36 und 37 Vorderräder 38 eines Kraftfahrzeugs angetrieben.

Der Fig. 2 ist die Schaltlogik für das Getriebe nach Fig. 1 zu entnehmen. In dieser Schaltlogik sind senkrecht die Gangstufen 1 bis 9 sowie R1 bis R3 aufgeführt, während in der Waagerechten die für die Schaltung der entsprechenden Gangstufen zu betätigenden Kuppelelemente 19 bis 22 sowie 30 bis 32 aufgetragen sind. Der Schaltlogik ist zu entnehmen, daß über die Kuppelelemente 19 bis 22 eine Gruppenschaltung erfolgt, während die Kuppelelemente 30 bis 32 innerhalb dieser jeweiligen Gruppen eine Schaltung der Gangstufen bewirken.

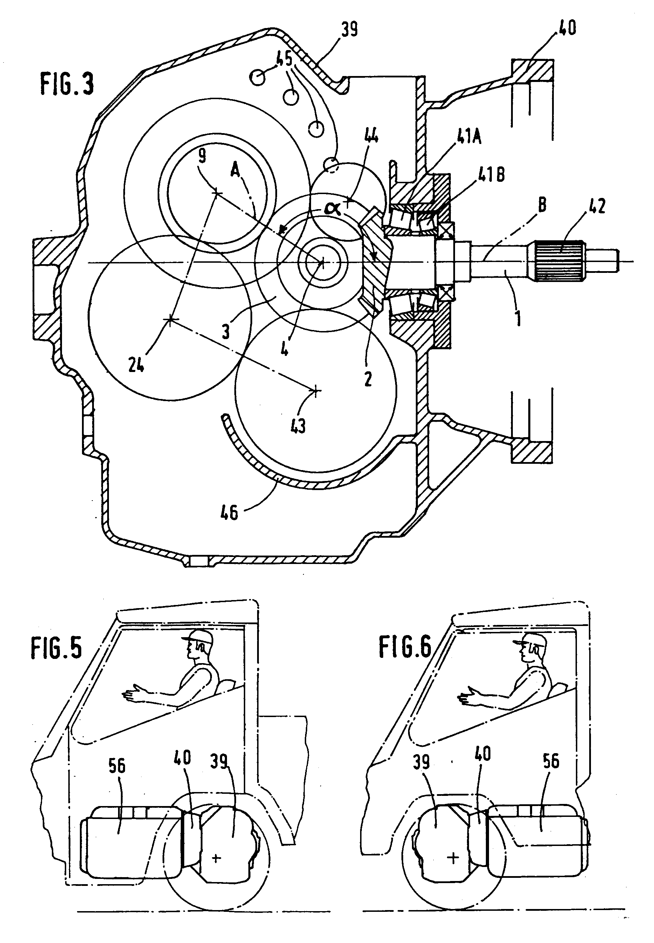

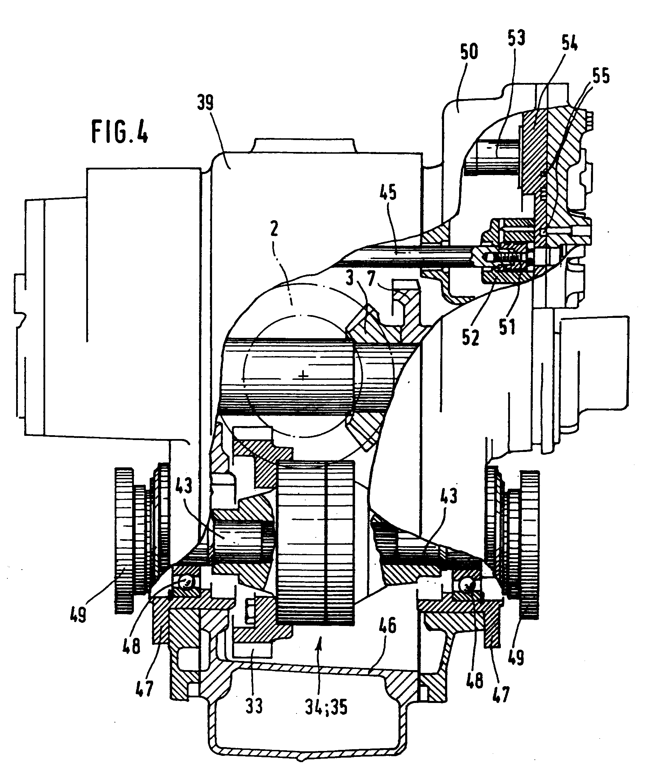

Weitere Einzelheiten eines erfindungsgemäß ausgeführten Zahnräderwechselgetriebes, dessen Getriebeschema nach Fig. 1 ausgebildet sein soll, ist den Fig. 3 und 4 zu entnehmen. In der Fig. 3 ist mit 39 ein Getriebegehäuse bezeichnet, welches eine Kupplungsglocke 40 aufweist, die eine nicht dargestellte Fahrkupplung aufnimmt und mit einem ebenfalls nicht dargestellten Kurbelgehäuse einer Brennkraftmaschine verbindbar ist. Im Getriebegehäuse 39 ist die Eingangswelle 1 über Wälzlager 41A und 41B gelagert, wobei die Eingangswelle 1 an ihrem in die Kupplungsglocke hineinragenden Ende eine Mitnahmeverzahnung 42 und an ihrem in das Innere des Getriebegehäuses 39 hineinragenden Ende das Kegelrad 2 aufweist. Die Mitnahmeverzahnung 42 wird üblicherweise mit einem Sekundärteil einer reibschlüssigen Fahrkupplung oder eines Drehmomentwandlers verbunden.

Innerhalb des Getriebegehäuses, sind, wie insbesondere aus Fig. 3 hervorgeht, die Antriebswelle 4, die Vorgelegewelle 9, die Hauptwelle 24 und Abtriebswellen 43 des Ausgleichsgetriebes 35 angeordnet. Weiterhin ist im Getriebegehäuse 39 oberhalb der Antriebswelle 4 eine Rückwärtsgangwelle 44 angeordnet. Ebenfalls oberhalb der Antriebswelle 4 sowie auch oberhalb der Vorgelegewelle 9 verlaufen Schaltstangen 45, die über nicht näher dargestellte Schaltgabeln zur Betätigung der Schaltkupplungen 17, 18, 28 und 29 dienen. Dabei weisen die Schaltstangen 45 einen nahezu gleichen radialen Abstand zum Zentrum der Vorgelegewelle 9 auf.

Verbindet man die Mitten der jeweiligen Wellen Antriebswelle 4, Vorgelegewelle 9, Hauptwelle 24, Abtriebswelle 43 und wiederum Antriebswelle 4 entsprechend fortlaufend miteinander, wie das in Fig. 3 geschehen ist, so weisen die Linien einen etwa trapezförmigen Verlauf auf. Eine entsprechende Verbindungslinie A zwischen der jeweiligen Mitte der Antriebswelle 4 und der Vorgelegewelle 9 schließt dabei mit der Längsmittellinie B der Eingangswelle 1 einen Winkel α ≦ 150° ein. Durch diese Anordnung ergibt sich eine besonders kompakte Bauweise des Getriebes. Da die Eingangswelle 1 in einer horizontalen Ebene mit der Antriebswelle 4 angeordnet ist, läßt sich der Kegeltrieb mit nicht achsversetzten Kegelrädern 2 und 3 ausbilden. Vorteilhaft ist die Anordnung des Umkehrrades 23 oberhalb der Antriebswelle 4, wobei sich auf diese Weise eine einfache Gruppenschaltung der Rückwärtsgruppe realisieren läßt und das Umkehrrad 23 in einem ohnehin zur Verfügung stehendem Freiraum innerhalb des Getriebegehäuses 39 angeordnet werden konnte.

Weitere Einzelheiten können der Fig. 4 entnommen werden. Dieser Fig. 4 ist in Kombination mit der Fig. 3 eine Ölfangrippe 46 zu entnehmen, die radial zum Ausgangszahnrad 33, das auf dem Differentialkorb 34 befestigt ist, verläuft. Außerdem geht aus der Fig. 4 hervor, daß das Getriebegehäuse 39 in seinem unteren Bereich eine axiale Erstreckung aufweist, die nur durch die Länge des Ausgleichsgetriebes 35 bestimmt ist. Die beiden aus dem Ausgleichsgetriebe 35 herausgeführten Abtriebswellen 43, die über Flansche 47 und Kugellager 48 im Getriebegehäuse 39 angeordnet sind, weisen an ihren Enden Kuppelstücke 49 auf, an denen über nicht näher dargestellte Gleichlaufgelenke die Halbachsen 36 und 37 angreifen (vgl. Fig. 1).

Im oberen Bereich des nach Fig. 4 ausgeführten Zahnräderwechselgetriebes befindet sich eine mit dem Getriebegehäuse 39 verbindbare Schaltbox 50, in der elektrohydraulisch betätigte Schaltkolben 51 für eine Längsverschiebung der Schaltstangen 45 sorgen. Bestandteil der Schaltbox ist dabei eine Schaltzylinder 52 und Schaltventile 53 tragende Steuerplatte 54, an deren mit den Schaltventilen 53 verbundenen Oberfläche durch Ausfräsungen Steuerkanäle 55 hergestellt sind. Schaltzylinder 52, Schaltventile 53, Steuerplatte 54 und eine Deckplatte 57 bilden zusammen eine Einheit, die an das Getriebegehäuse 39 angeschraubt wird. Diese Einheit läßt sich unabhängig von der verwendeten Hilfsenergie (z. B. Drucköl oder Druckluft) leicht montieren und demontieren.

Die Fig. 5 und 6 zeigen eine Anordnung des erfindungsgemäßen Zahnräderwechselgetriebes in einem Nutzkraftfahrzeug. In beiden Fällen wird dieses Nutzkraftfahrzeug an seiner Vorderachse angetrieben, wobei mit der jeweiligen Kupplungsglocke 40 eine Brennkraftmaschine 56 verbunden ist. Nach Fig. 5 liegt die Brennkraftmaschine 56 in Fahrtrichtung gesehen vor dem Zahnräderwechselgetriebe, d. h. vor der Vorderachse, während nach Fig. 6 die Brennkraftmaschine in Fahrtrichtung gesehen hinter dem Zahnräderwechselgetriebe, also hinter der Vorderachse liegt. Beiden Darstellungen ist zu entnehmen, daß durch das erfindungsgemäß sehr kurz bauende, auch eine geringe Bauhöhe aufweisende Zahnräderwechselgetriebe eine ausreichende Beinfreiheit innerhalb der Fahrerkabine des Nutzkraftfahrzeugs vorhanden ist.

### Bezugszeichen

- 1: Eingangswelle
- 2: Kegelrad
- 3: Kegelrad
- 4: Antriebswelle
- 5: Zahnrad
- 6: Zahnrad
- 7: Zahnrad
- 8: Zahnrad
- 9: Vorgelegewelle
- 10: Zahnrad
- 11: Zahnrad
- 12: Zahnrad
- 13: Zahnrad
- 14: Zahnrad
- 15: Zahnrad
- 16: Zahnrad
- 17: Schaltkupplung
- 18: Schaltkupplung
- 19: Kuppelelement
- 20: Kuppelelement
- 21: Kuppelelement
- 22: Kuppelelement
- 23: Umkehrrad
- 24: Hauptwelle
- 25: Zahnrad
- 26: Zahnrad
- 27: Zahnrad
- 28: Schaltkupplung
- 29: Schaltkupplung
- 30: Kuppelelement
- 31: Kuppelelement
- 32: Kuppelelement
- 33: Ausgangszahnrad
- 34: Differentialkorb
- 35: Ausgleichsgetriebe
- 36: Halbachse
- 37: Halbachse
- 38: Vorderräder
- 39: Getriebegehäuse
- 40: Kupplungsglocke
- 41A: Wälzlager
- 41B: Wälzlager
- 42: Mitnahmeverzahnung
- 43: Abtriebswelle
- 44: Rückwärtsgangwelle
- 45: Schaltstangen
- 46: Ölfangrippe
- 47: Flansche
- 48: Kugellager
- 49: Kuppelstücke
- 50: Schaltbox
- 51: Schaltkolben
- 52: Schaltzylinder
- 53: Schaltventile
- 54: Steuerplatte
- 55: Steuerkanäle
- 56: Brennkraftmaschine
- 57: Deckplatte

## Patentansprüche

1. Zahnräderwechselgetriebe in Vorgelegebauweise für ein Kraftfahrzeug mit einer quer zur gesamten übrigen Wellenanordnung des Zahnräderwechselgetriebes, vorzugsweise im Bereich von dessen Quermittelebene verlaufenden Eingangswelle (1), die von einer Brennkraftmaschine antreibbar und über einen Kegeltrieb (2, 3) mit einer Antriebswelle (4) trieblich verbunden ist, und mit einem Ausgleichsgetriebe (35), das unterhalb der Antriebswelle (4) angeordnet und mit zumindest einer parallel zu der Antriebswelle verlaufenden Abtriebswelle (43) verbunden ist, wobei das Ausgleichsgetriebe (35) von der Antriebswelle (4) aus über zumindest eine sowohl zur Antriebswelle (4) als auch zum Ausgleichsgetriebe (35) bzw. der Abtriebswelle (43) parallel verlaufende Zwischenwelle (9, 24) und Zahnradpaare (5-10, 6-11, 7-15, 8-16, 12-25, 13-26, 14-27) antreibbar ist, dadurch **gekennzeichnet,** daß die Eingangswelle (1) und die Antriebswelle (4) in einer horizontalen Ebene angeordnet sind, daß als Zwischenwellen eine mit einem vertikalen Abstand oberhalb der Längsmittelachse (B) der Eingangswelle (1) verlaufende Vorgelegewelle (9) und eine Hauptwelle (24) vorgesehen sind, wobei ein Kraftfluß von der Antriebswelle (4) über die Vorgelege- (9) und die Hauptwelle (24) auf zumindest ein drehfest mit dem Ausgleichsgetriebe (35) verbundenes, in der axialen Erstreckung von dessen Differentialkorb (34) liegendes Ausgangszahnrad (33) erfolgt und daß sämtliche Zahnräder (10 bis 16) der Vorgelegewelle (9) frei drehbar auf dieser gelagert und mittels Schaltkupplungen (17, 18, 28, 29) mit dieser kuppelbar sind.

2. Zahnräderwechselgetriebe nach Anspruch 1, dadurch **gekennzeichnet,** daß ein Umkehrrad (23) oder Rückwärtsvorgelege oberhalb der Antriebswelle (4) angeordnet ist und in Eingriff ist mit einem drehfest auf der Antriebswelle (4) angeordneten Zahnrad (5) und einem frei drehbar auf der Vorgelegewelle (9) angeordneten Zahnrad (10), welches über eine Schaltkupplung (18) mit der Vorgelegewelle (9) kuppelbar ist.

3. Zahnräderwechselgetriebe nach den Ansprüchen 1 und 2, dadurch **gekennzeichnet,** daß jeweils ein Teil der frei drehbar auf der Vorgelegewelle (9) angeordneten Zahnräder (10, 11, 15, 16 bzw. 12, 13, 14) gemeinsam mit drehfest auf der Antriebswelle (4) und der Hauptwelle (24) angeordneten Zahnrädern (5 bis 8 bzw. 25 bis 27) ein Gruppengetriebe und ein diesem nachgeschaltetes Grundgetriebe bildet.

4. Zahnräderwechselgetriebe nach Anspruch 1, dadurch **gekennzeichnet,** daß die Vorgelegewelle (9) sowie die Antriebs- (4) und die Eingangswelle (1) derart zueinander angeordnet sind, daß eine Verbindungslinie (A) zwischen der jeweiligen Mitte der Antriebswelle (4) und der Vorgelegewelle (9) mit der Längsmittellinie (B) der Eingangswelle (1) einen Winkel α ≦ 150° einschließt.

5. Zahnräderwechselgetriebe nach den Ansprüchen 1 und 4, dadurch **gekennzeichnet,** daß die parallel zueinander verlaufenden Wellen (Antriebswelle 4, Hauptwelle 9, Ausgangswelle 7 und Abtriebswelle 43) des Zahnräderwechselgetriebes derart zueinander angeordnet sind, daß Linien, die in Richtung des Kraftflusses die jeweiligen Wellenmitten miteinander verbinden, einen trapezartigen Verlauf haben.

6. Zahnräderwechselgetriebe nach Anspruch 1, dadurch **gekennzeichnet,** daß stirnseitig des Getriebegehäuses (39), oberhalb der Vorgelegewelle (9) eine Schaltbox (50) angeordnet ist, die über hydraulische, pneumatische oder elektrische Betätigungselemente (51, 52, 53) auf radial zur Vorgelegewelle (9) angeordnete Schaltstangen (45) wirkt.

7. Zahnräderwechselgetriebe nach Anspruch 5, dadurch **gekennzeichnet,** daß die Außenkontur des Getriebegehäuses (39) im Bereich des Ausgleichsgetriebes (35) in Achsrichtung im Vergleich zur übrigen Kontur schmaler ausgebildet ist, wobei die axiale Abmessung in diesem Bereich etwa der axialen Baulänge eines Differentialkorbes (34) des Ausgleichsgetriebes (35) entspricht.

## Claims

1. Transmission-style gear change box for a motor vehicle, having an input shaft (1) which extends at right angles to all of the remaining shaft arrangement of the gear change box, preferably in the region of the latter's transverse centre plane, is drivable by an i.c. engine and is drivingly connected by a bevel transmission (2, 3) to a drive shaft (4), and having a differential gearing (35) which is disposed below the drive shaft (4) and is connected to at least one output shaft (43) extending parallel to the drive shaft, the differential gearing (35) being drivable by the drive shaft (4) through at least one intermediate shaft (9, 24) extending parallel both to the drive shaft (4) and to the differential gearing (35) or the output shaft (43) and through gear wheel pairs (5-10, 6-11, 7-15, 8-16, 12-25, 13-26, 14-27), characterized in that the input shaft (1) and the drive shaft (4) are disposed in a horizontal plane, that a layshaft (9) extending at a vertical distance above the longitudinal centre line (B) of the input shaft (1) and a main shaft (24) are provided as intermediate shafts, a power flow being effected from the drive shaft (4) via the layshaft (9) and the main shaft (24) to at least one output gear (33) connected non-rotatably to the differential gearing (35) and lying in the axial extension of the latter's differential cage (34), and that all of the gears (10 to 16) of the layshaft (9) are supported in a freely rotatable manner on said layshaft and are engageable with said layshaft by means of clutches (17, 18, 28, 29).

2. Gear change box according to claim 1, characterized in that a reversing wheel (23) or backward transmission gear is disposed above the drive shaft (4) and is meshed with a gear (5) disposed non-rotatably on the drive shaft (4) and with a gear (10) which is disposed in a freely rotatable manner on the layshaft (9) and is engageable with the layshaft (9) by means of a clutch (18).

3. Gear change box according to claims 1 and 2, characterized in that in each case one part of the gears (10, 11, 15, 16 or 12, 13, 14), which are disposed in a freely rotatable manner on the layshaft (9), jointly with gears (5 to 8 or 25 to 27) disposed non-rotatably on the drive shaft (4) and the main shaft (24) forms a group gearing and, secondary thereto, a basic gearing.

4. Gear change box according to claim 1, characterized in that the layshaft (9) as well as the drive shaft (4) and the input shaft (1) are so disposed relative to one another that a connecting line (A) between the centre of the drive shaft (4) and the centre of the layshaft (9) forms with the longitudinal centre line (B) of the input shaft (1) an angle α ≦ 150°.

5. Gear change box according to claims 1 and 4, characterized in that the shafts of the gear change box extending parallel to one another (drive shaft 4, main shaft 24, output shaft 7 and output shaft 43) are so disposed relative to one another that lines connecting the respective shaft centres to one another in the direction of the power flow have a trapezoidal shape.

6. Gear change box according to claim 1, characterized in that disposed at the front end of the gearbox (39), above the layshaft (9), is a switch box (50) which acts via hydraulic, pneumatic or electrical operating elements (51, 52, 53) upon drive rods (45) disposed radially relative to the layshaft (9).

7. Gear change box according to claim 5, characterized in that the external contour of the gearbox (39) in the region of the differential gearing (35) is narrower in an axial direction than the remaining contour, the axial dimension in said region roughly corresponding to the overall axial length of a differential cage (34) of the differential gearing (35).

## Revendications

1. Boîte de vitesses à engrenages à renvoi pour véhicule à moteur, comportant un arbre d'entrée (1) disposé perpendiculairement à l'ensemble des autres arbres de la boîte, de préférence à proximité du plan médian de celle-ci, l'arbre d'entrée étant entraîné par un moteur à combustion et relié par un engrenage conique (2, 3) à un arbre primaire (4), et comportant un différentiel (35) disposé au-dessous de l'arbre primaire (4) et relié à un arbre secondaire (43) parallèle à l'arbre primaire, le différentiel (35) étant susceptible d'être entraîné par l'arbre primaire (4) via au moins un arbre intermédiaire (9, 24) parallèle à la fois à l'arbre primaire (4) et au différentiel (35) ou à l'arbre secondaire (43), et via des paires de pignons (5-10, 6-11, 7-15, 8-16, 12-25, 13-26, 14-27), **caractérisée** en ce que l'arbre d'entrée (1) et l'arbre primaire (4) sont disposés dans un plan horizontal, en ce qu'il est prévu en guise d'arbres intermédiaires un arbre de renvoi (9) et un arbre principal (24), l'arbre de renvoi étant disposé avec un écart vertical au-dessus de l'axe longitudinal (B) de l'arbre d'entrée (1), de sorte qu'un flux de forces passe de l'arbre primaire (4) par l'arbre de renvoi (9) et l'arbre principal (24) à au moins un pignon de sortie (33) solidaire en rotation du différentiel (35) et disposé dans l'extension axiale d'une cage (34) du différentiel, et en ce que tous les pignons (10 à 16) de l'arbre de renvoi (9) sont librement rotatifs sur cet arbre et sont susceptibles de lui être accouplés au moyen d'embrayages (17, 18, 28, 29).

2. Boîte de vitesses selon la revendication 1, **caractérisée** en ce qu'un pignon d'inversion (23) ou un renvoi de marche arrière est disposé au-dessus de l'arbre primaire (4) et s'engrène sur un pignon fixe (5) de l'arbre primaire (4) et sur un pignon (10) monté fou sur l'arbre de renvoi (9) et susceptible d'être accouplé à l'arbre de renvoi (9) par un embrayage (18).

3. Boîte de vitesses selon les revendications 1 et 2, **caractérisée** en ce que deux parties des pignons (10, 11, 15, 16 et 12, 13, 14) montés fous sur l'arbre de renvoi (9) forment, en combinaison respectivement avec des pignons fixes (5 à 8 et 25 à 27) de l'arbre primaire (4) et de l'arbre principal (24), un groupe-relais et une boîte de base qui suit celui-ci.

4. Boîte de vitesses selon la revendication 1, **caractérisée** en ce que l'arbre de renvoi (9), l'arbre primaire (4) et l'arbre d'entrée (1) sont disposés les uns par rapport aux autres de telle manière qu'une droite (A) passant par les centres respectifs de l'arbre primaire (4) et de l'arbre de renvoi (9) forme un angle α≦150° avec l'axe longitudinal (B) de l'arbre d'entrée (1).

5. Boîte de vitesses selon les revendications 1 et 4, **caractérisée** en ce que les arbres mutuellement parallèles (arbre primaire 4, arbre principal 9, arbre de sortie 7 et arbre secondaire 43) de la boîte de vitesses sont disposés les uns par rapport aux autres de telle manière que des droites qui relient leur centres respectifs dans le sens du flux de forces ont un tracé trapézoïdal.

6. Boîte de vitesses selon la revendication 1, **caractérisée** en ce qu'une boîte de commande (50) est disposée sur une face frontale du carter (39) de la boîte de vitesses, au-dessus de l'arbre de renvoi (9), et agit sur des tiges de commande (45) disposées radialement par rapport à l'arbre de renvoi (9) au moyen d'actionneurs hydrauliques, pneumatiques ou électriques (51, 52, 53).

7. Boîte de vitesses selon la revendication 5, **caractérisée** en ce que le contour extérieur du carter (39) dans la zone du différentiel (35) est plus étroit que le contour habituel dans la direction de l'essieu, de sorte que la dimension axiale dans cette zone correspond approximativement à l'encombrement axial d'une cage (34) du différentiel (35).
